# EUROPEAN PATENT APPLICATION

(11) **EP 4 607 612 A1**
(43) Date of publication of application: **27.08.2025**
(21) Application number: 23928037.3
(22) Date of filing: 22.03.2023
(51) Int. Cl.: H01M 4/505, H01M 4/525, H01M 4/36, H01M 10/0525

(54) **POSITIVE ELECTRODE ACTIVE MATERIAL, BATTERY CELL, BATTERY, AND ELECTRIC DEVICE**

(71) Applicant: Contemporary Amperex Technology (Hong Kong) Limited, Central (HK)
(72) Inventor: SHEN, Chongheng, Ningde, Fujian 352100 (CN); WU, Changxu, Ningde, Fujian 352100 (CN); ZHAO, Dong, Ningde, Fujian 352100 (CN); HUAN, Shuxing, Ningde, Fujian 352100 (CN); WANG, Bangrun, Ningde, Fujian 352100 (CN); LIU, Na, Ningde, Fujian 352100 (CN)
(74) Representative: Ziebig Hengelhaupt Intellectual Property Attorneys Patentanwaltskanzlei PartGmbB
(86) International application number: PCT/CN2023/083105
(87) International publication number: WO 2024/192724

(57) **Abstract**

Embodiments of this application provide a positive electrode active material, a battery cell, a battery, and a power consuming apparatus. The positive electrode active material includes: a matrix, where a chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and a coating layer, where the coating layer is disposed on a surface of the matrix, and the coating layer includes boron-containing alloy. The technical solutions of this application can improve an energy retention rate and an initial gram capacity of a battery.

## Description

### TECHNICAL FIELD

This application relates to the field of battery technologies, and in particular, to a positive electrode active material, a battery cell, a battery, and a power consuming apparatus.

### BACKGROUND

In recent years, lithium batteries are used in increasingly wide fields, for example, energy storage power supply systems such as wind power stations, water power stations, thermal power stations, and solar power stations, and a plurality of fields such as electric bicycles, electric motorcycles, electric vehicles, military equipment, and aerospace. In addition to the great development of the lithium battery, higher requirements are put forward for an energy retention rate, an energy density, and the like of the lithium battery.

Therefore, how to improve an energy retention rate and an initial gram capacity of a battery is an urgent problem to be resolved.

### SUMMARY

This application is proposed in view of the foregoing topics. An objective of this application is to provide a positive electrode active material, a battery cell, a battery, and a power consuming apparatus. Both an energy retention rate and an initial gram capacity of the battery can be improved.

According to a first aspect of this application, a positive electrode active material is provided, including: a matrix, where a chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and a coating layer, where the coating layer is disposed on a surface of the matrix, and the coating layer includes boron-containing alloy.

In this embodiment of this application, the positive electrode active material includes the matrix and the coating layer disposed on the surface of the matrix. Further, the chemical formula of the matrix is Li[LiₓNiₐCo_{b}Mn_{c}M_{d}]O₂, M includes at least one of Mg, B, Al, V, Ti, Zr, Sn, La, P, and Mo, x+a+b+c+d=1, x>0, a>0, 0<b<0.1, c>0, d≥0, and the coating layer is the boron-containing alloy. The coating layer including the boron-containing alloy is disposed on the surface of the matrix, and the coating layer is in a molten fluid state at a high temperature, has good wettability on a grain boundary with high surface energy, and can be uniformly distributed on the matrix. In addition, the boron-containing alloy has high electronic conductivity performance, so that not only a bidentate oxygen atom at the grain boundary of the matrix can be well protected, but also migration dynamics of lithium ions on a surface of the positive electrode active material can be improved. Therefore, a migration speed of active lithium ions in a battery is increased, energy loss, attenuation, and polarization of the battery in a long cycle are reduced, and an energy retention rate and an initial gram capacity of the battery are further improved.

In some implementations, the boron-containing alloy includes boron and transition metal, and the transition metal includes at least one of Co, Hf, Zr, and Ti.

In this embodiment of this application, the boron-containing alloy can improve the migration dynamics of the lithium ions on the surface of the positive electrode active material, to reduce the energy loss and attenuation of the lithium battery in the long cycle. The boron-containing alloy includes the transition metal and the boron, so that a compound including the transition metal and the boron has good structural stability and high-temperature resistance performance, to further improve the energy retention rate of the battery.

In some implementations, the boron-containing alloy includes at least one of CoBₙ, HfBₙ, ZrBₙ, TiBₙ, and WBₙ, and 0<n≤3.

In this embodiment of this application, CoBₙ, HfBₙ, ZrBₙ, TiBₙ, and WBₙ, 0<n≤3, not only have good structural stability and high-temperature resistance performance, but also have easily obtained and prepared raw materials. CoBₙ, HfBₙ, ZrBₙ, TiBₙ, and WBₙ, 0<n≤3, are disposed on the surface of the matrix as the coating layer, and the coating layer and the matrix jointly form the positive electrode active material, so that not only the energy retention rate of the battery can be improved, but also wide application of the battery is facilitated.

In some implementations, the boron-containing alloy further includes lithium and oxygen.

In this embodiment of this application, when the boron-containing alloy including the transition metal, the lithium, and the oxygen is disposed on the surface of the matrix as the coating layer, and the coating layer and the matrix jointly serve as the positive electrode active material of the lithium battery, the coating layer releases lithium ions in the long cycle of the battery. This part of lithium ions may serve as active lithium ions to participate in reaction of the battery, so as to compensate for consumption of lithium ions of the battery in the long cycle, and further reduce the attenuation of the battery in the long cycle and improve the energy retention rate of the battery.

In some implementations, micro-stress of the positive electrode active material ranges from 0.05% to 1%, and optionally, ranges from 0.1% to 0.5%.

In this embodiment of this application, to improve the migration dynamics of the lithium ions, the coating layer of the boron-containing alloy is coated on the surface of the matrix, and the coating layer and the matrix jointly serve as the positive electrode active material of the lithium battery. However, a difference between stress in micropores of an existing positive electrode active material is large, and a fatigue phenomenon easily occurs on the material. Consequently, deintercalation of the lithium ions in the positive electrode active material is increasingly difficult, resulting in energy attenuation of the battery. The micro-stress of the positive electrode active material is maintained in a range of 0.05% to 1%, in particular, from 0.1% to 0.5%, so that overall flexibility of the positive electrode active material can be improved. Therefore, when the battery is in the long cycle, the deintercalation of the lithium ions in the positive electrode active material becomes easier, to further reduce the energy attenuation of the battery.

In some implementations, a peak intensity ratio of Mn-O to Ni-O in the positive electrode active material ranges from 20 to 50, and optionally, ranges from 25 to 35.

In this embodiment of this application, the peak intensities of Mn-O and Ni-O in the positive electrode active material are maintained in a range of 20 to 50, in particular, from 25 to 35, so that strong structural stability of the surface of the positive electrode active material can be ensured, to improve energy retention in the long cycle of the battery.

In some implementations, a coating content of the coating layer ranges from 200 ppm to 15000 ppm, and optionally, ranges from 500 ppm to 10000 ppm, based on a ratio of a weight of a metal element in the coating layer to a total weight of the matrix.

In this embodiment of this application, the coating content of the coating layer in the positive electrode active material is maintained in a range of 200 ppm to 15000 ppm, in particular, from 500 ppm to 10000 ppm, so that not only the coating layer performs a function, but also costs are reduced, and an unnecessary waste of the coating layer is avoided.

In some implementations, residual alkali on a surface of the positive electrode active material ranges from 200 ppm (w/w) to 2000 ppm (w/w), and optionally, ranges from 500 ppm (w/w) to 1000 ppm (w/w).

In this embodiment of this application, when a content of alkaline materials in the positive electrode active material is excessively high, initial coulombic efficiency and a discharge gram capacity of the battery are low. When the residual alkali on the surface of the positive electrode active material ranges from 200 ppm (w/w) to 2000 ppm (w/w), in particular, from 500 ppm (w/w) to 1000 ppm (w/w), the initial gram capacity of the battery can be improved.

In some implementations, a specific surface area of the positive electrode active material ranges from 0.5 m²/g to 9 m²/g, and optionally, ranges from 0.7 m²/g to 3.5 m²/g.

In this embodiment of this application, the specific surface area of the positive electrode active material is properly reduced, so that pores of the positive electrode active material are rich, to help improve the initial gram capacity of the battery. However, if the specific surface area is excessively large, the positive electrode active material becomes loose, which is adverse to repeated deintercalation of metal ions. The specific surface area of the positive electrode active material ranges from 0.5 m²/g to 9 m²/g, in particular, from 0.7 m²/g to 3.5 m²/g, to help normal deintercalation of the metal ions in the positive electrode active material.

In some implementations, an oxygen defect of the positive electrode active material ranges from 1.5 to 4, and optionally, ranges from 1.8 to 3.5.

In this embodiment of this application, the oxygen defect of the positive electrode active material may change a local electronic structure of the material, to generate an active lithium-ion adsorption site and increase a transmission rate of the lithium ions. The oxygen defect of the positive electrode active material ranges from 1.5 to 4, in particular, from 1.8 to 3.5, to help further improve the migration dynamics of the lithium ions, and further improve cycle performance and an energy density of the battery.

In some implementations, a volume average particle size Dv50 of the positive electrode active material ranges from 2 µm to 20 µm, and optionally, ranges from 5 µm to 12 µm.

In this embodiment of this application, the volume average particle size Dv50 of the positive electrode active material is maintained in a range of 2 µm to 20 µm, in particular, from 5 µm to 12 µm, so that the battery can have a high discharge gram capacity and high initial coulombic efficiency, and a possibility that the positive electrode active material becomes loose can also be reduced, where the deintercalation of the lithium ions in the loose positive electrode active material is unstable.

In some implementations, a compaction density of the positive electrode active material ranges from 2 g/cm³ to 3.5 g/cm³, and optionally, ranges from 2.6 g/cm³ to 3.5 g/cm³.

In this embodiment of this application, if the compaction density of the positive electrode active material is excessively low, an electrolyte solution may be infiltrated into the positive electrode active material, causing serious side reaction. As a result, the battery severely attenuates in the long cycle. The compaction density of the positive electrode active material ranges from 2 g/cm³ to 3.5 g/cm³, in particular, from 2.6 g/cm³ to 3.5 g/cm³, to help further improve the energy retention rate of the battery.

According to a second aspect of this application, a method for preparing a positive electrode active material is provided. The method includes the following steps: providing a matrix, where a chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; dispersing the matrix into an acidic solution and performing stirring, to obtain a matrix mixed solution, where PH of the acidic solution optionally ranges from 1 to 3; curing and drying the matrix mixed solution, to obtain matrix mixed powders; mixing the matrix mixed powders with powders of a coating layer, to obtain a positive electrode active material precursor, where the powders of the coating layer include boron-containing alloy; and sintering the positive electrode active material precursor, to obtain a positive electrode active material. The positive electrode active material includes: the matrix, where the chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and the coating layer, where the coating layer is disposed on a surface of the matrix, and the coating layer includes the boron-containing alloy.

In this embodiment of this application, after the matrix is put into the acidic solution whose PH value ranges from 1 to 3 and processed, the matrix is then mixed with the powders of the coating layer, so that residual alkali on the surface of the matrix can be removed in a moderate manner, to avoid dissolution of an active material in the positive electrode active material. This helps improve a gram capacity of a battery, to improve an energy density of the battery.

In some implementations, acid in the acidic solution includes at least one of sulphuric acid, nitric acid, ammonium persulfate, citric acid, oxalic acid, sodium citrate, ammonium citrate, ammonium citrate dibasic, alpha hydroxy acid, salicylic acid, succinic acid, or succinic anhydride.

In this embodiment of this application, the acid in the acidic solution includes at least one of sulphuric acid, nitric acid, ammonium persulfate, citric acid, oxalic acid, sodium citrate, ammonium citrate, ammonium citrate dibasic, alpha hydroxy acid, salicylic acid, succinic acid, or succinic anhydride, in other words, the matrix is processed in the acidic solution including any one of the foregoing acid, so that an active material in the matrix is not dissolved because the acidic solution is moderate.

In some implementations, the acidic solution further includes ethanol or water.

In this embodiment of this application, the acidic solution further includes ethanol or water. Ethanol and water are both good solvents for dissolving acid such as succinic acid or succinic anhydride. The acidic solution includes ethanol or water, so that the acid such as succinic acid or succinic anhydride is uniformly and sufficiently dissolved. Therefore, the matrix is uniformly processed.

In some implementations, a mass ratio of the acidic solution to the matrix ranges from 6 to 35, and optionally, ranges from 10 to 20.

In this embodiment of this application, the acid such as succinic acid or succinic anhydride is dissolved in ethanol or water, to form the acidic solution for processing the matrix. The mass ratio of the acidic solution to the matrix ranges from 6 to 35, in particular, from 10 to 20, so that the residual alkali on the surface of the matrix can be sufficiently processed.

In some implementations, a mass percentage of the acid in the acidic solution ranges from 0.1% to 30%, and optionally, ranges from 10% to 20%.

In this embodiment of this application, the mass percentage of the acid in the acidic solution ranges from 0.1% to 30%, in particular, from 10% to 20%, so that the residual alkali on the surface of the matrix can be removed in a moderate manner.

In some implementations, the sintering the positive electrode active material precursor includes: sintering the positive electrode active material precursor in an oxygen atmosphere or an inert gas atmosphere.

In this embodiment of this application, the positive electrode active material precursor is sintered in the oxygen atmosphere or the inert gas atmosphere, so that unnecessary side reaction can be avoided.

In some implementations, a temperature of the sintering in the inert gas atmosphere ranges from 250°C to 400°C.

In this embodiment of this application, when the positive electrode active material precursor is sintered by using inert gas, the temperature of the sintering is maintained in a range of 250°C to 400°C, so that the positive electrode active material precursor can be completely sintered.

In some implementations, a temperature of the sintering in the oxygen atmosphere ranges from 500°C to 700°C.

In this embodiment of this application, when the positive electrode active material precursor is sintered by using oxygen, the temperature of the sintering is maintained in a range of 500°C to 700°C, so that the positive electrode active material precursor can be completely sintered.

In some implementations, duration of the sintering ranges from 3 h to 10 h.

In this embodiment of this application, the duration for which the positive electrode active material precursor is sintered ranges from 3 h to 10 h, so that the positive electrode active material precursor can be completely sintered.

According to a third aspect of this application, a battery cell is provided, including the positive electrode active material in any one of the embodiments of the first aspect of this application, or the positive electrode active material prepared by using the method for preparing a positive electrode active material in the second aspect.

According to a fourth aspect of this application, a battery is provided, including the battery cell in the third aspect of this application.

According to a fifth aspect of this application, a power consuming apparatus is provided, including the battery in the fourth aspect of this application.

### BRIEF DESCRIPTION OF THE DRAWINGS

To describe the technical solutions of embodiments of this application more clearly, the accompanying drawings required in the embodiments of this application are briefly described below. It is clear that the accompanying drawings described below are only some embodiments of this application. For a person of ordinary skill in the art, other accompanying drawings can be further obtained based on the accompanying drawings without creative efforts.
FIG. 1 is a schematic diagram of a structure of a positive electrode active material according to an implementation of this application;
FIG. 2 is a schematic diagram of a battery cell according to an implementation of this application;
FIG. 3 is a schematic diagram of a structure of a battery cell according to another implementation of this application;
FIG. 4 is a schematic diagram of a structure of a battery according to an implementation of this application; and
FIG. 5 is a schematic diagram of a vehicle according to an implementation of this application.

### DETAILED DESCRIPTION

The following properly describes implementations of a positive electrode active material, a battery cell, a battery, and a power consuming apparatus of this application in detail with reference to the accompanying drawings, but there are situations where unnecessary detailed description is omitted. For example, there are cases in which detailed descriptions of well-known matters and repeated descriptions of actually identical structures are omitted. In addition, the accompanying drawings and the following descriptions are provided for a person skilled in the art to fully understand this application and are not intended to limit the subject matter recorded in the claims.

A "range" disclosed in this application is defined in a form of a lower limit and an upper limit, a given range is defined by selecting a lower limit and an upper limit, and the selected lower limit and upper limit define boundaries of a particular range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. In addition, if minimum range values 1 and 2 are listed, and if maximum range values 3, 4, and 5 are listed, the following ranges can all be expected: 1 to 3, 1 to 4, 1 to 5, 2 to 3, 2 to 4, and 2 to 5. In this application, unless otherwise specified, a value range "a to b" represents an abbreviated representation of any combination of real numbers between a and b, where a and b are both real numbers. For example, a value range "0 to 5" indicates that all real numbers between "0 to 5" are listed in this specification, and "0 to 5" is only an abbreviated representation of these value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of this application can be combined with each other form new technical solutions.

Unless otherwise specified, all technical features and optional technical features of this application can be combined with each other to form new technical solutions.

Unless otherwise specified, all the steps in this application can be performed in the order described or in a random order, and preferably in the order described. For example, a method includes steps (a) and (b), indicating that the method may include steps (a) and (b) performed sequentially, or may include steps (b) and (a) performed sequentially. For example, the method may further include step (c), indicating that step (c) may be added to the method in any order. For example, the method may include steps (a), (b), and (c), or may include steps (a), (c), and (b), or may include steps (c), (a), and (b).

Unless otherwise specified, "comprising" and "including" mentioned in this application indicate open inclusion or closed inclusion. For example, "comprising" and "including" may indicate that other components not listed may further be comprised or included, or only listed components may be comprised or included.

The term "above", "below", "greater than", or "less than" used in this application includes a number itself. For example, "at least one" means one or more, and "at least one of A and B" means "A", "B", or "A and B".

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Lithium batteries are widely used in consumer electronic products due to advantages such as a high energy density, a high power density, and a long cycle life. In recent years, with the continuous development of electric vehicles and energy storage systems, people have increasingly high requirements on the battery. Therefore, it is particularly important to develop a large-scale energy storage system with a high initial gram capacity and a stable energy retention rate.

For some existing positive electrode materials, due to strong oxidation on an electrolyte during deep charging and damage to a structure of LiCoO₂ due to excessive delithiation, an actual available capacity of LiCoO₂ is only a half of a theoretical capacity. Although LiNi_{1/3}Co_{1/3}Mn_{1/3}O₂, LiNi_{1/2}Mn_{1/2}O₂, and the like reduce costs and toxicology of a material and obviously improve safety of the material, actual specific capacities of the layered-structure materials do not have large breakthroughs. Although three-dimensional tunnel-structure spinel positive electrode materials, such as LiMnO₄, LiNi_{0.5}Mn_{1.5}O₄, and a polyanionic positive electrode material, have high safety performance, theoretical specific capacities of the materials are also far from satisfying a performance requirement of a high-specific-energy lithium battery on a positive electrode material. Therefore, a layered lithium-rich manganese-based material with a high theoretical capacity exceeding 230 mAh/g has become one of important candidate positive electrode materials of a next-generation lithium battery.

However, an electronic conductivity rate of a lithium-rich manganese-based positive electrode material is low, and a battery polarization phenomenon in a cycle process is severe, resulting in fast energy attenuation of the battery. In particular, energy attenuation of the battery is very severe in a long cycle. In addition, when the lithium-rich manganese-based material is used as a positive electrode material of the lithium battery, an initial gram capacity of the lithium battery is also low. These disadvantages have become technical bottlenecks that limit application of the lithium-rich manganese-based positive electrode material. For the foregoing disadvantage of the fast energy attenuation, in most of the existing technologies, conductive carbon coating is used. However, when this solution is used, a manganese element in the lithium-rich manganese-based material may be reduced, resulting in distortion of an internal structure of the material and affecting stability of the lithium-rich manganese-based material. For the foregoing disadvantage of the low initial gram capacity, in most of the existing technologies, the lithium-rich manganese-based material is processed by using strong acid. However, when this solution is used, active lithium on a surface of the material is leached, resulting in a decrease in an energy density of the battery. Therefore, it is particularly important to develop a large-scale energy storage system with a high initial gram capacity and an energy retention rate that is stable in a cycle.

The following describes the positive electrode active material, the battery cell, the battery, and the power consuming apparatus in this application with reference to the accompanying drawings.

### [Positive electrode active material]

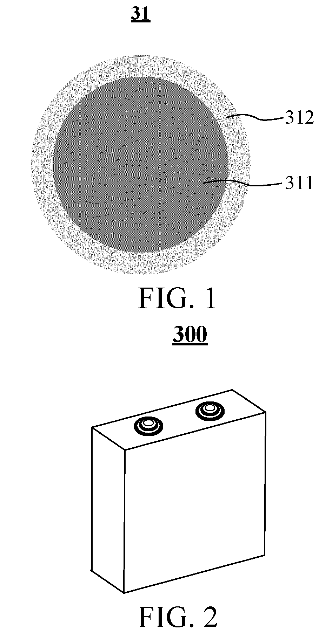

According to a first aspect of this application, a positive electrode active material is provided. FIG. 1 is a schematic diagram of a structure of a positive electrode active material according to an implementation of this application. The positive electrode active material 31 includes: a matrix, where a chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and a coating layer 312, where the coating layer 312 is disposed on a surface of the matrix 311, and the coating layer 312 includes boron-containing alloy.

It is learned through researches that the coating layer 312 whose material is the boron-containing alloy is coated on the surface of the matrix 311, so that not only an energy retention rate of a battery, but also an initial gram capacity of the battery, can be improved.

The coating layer 312 is disposed on the surface of the matrix 311, and the coating layer 312 is the boron-containing alloy. The coating layer 312 is in a molten fluid state at a high temperature, has good wettability on a grain boundary with high surface energy, and can be uniformly distributed on the matrix 311. In addition, the boron-containing alloy has high electronic conductivity performance, so that not only a bidentate cation at the grain boundary of the matrix 311 can be well protected, but also migration dynamics of lithium ions on a surface of the positive electrode active material 31 can be improved. Therefore, a migration speed of active lithium ions in a battery is increased, energy loss, attenuation, and polarization of the battery in a long cycle are reduced, and an energy retention rate and an initial gram capacity of the battery are further improved.

In some implementations, the boron-containing alloy includes boron and transition metal, and the transition metal includes at least one of Co, Hf, Zr, and Ti.

In the foregoing solution, the boron-containing alloy includes the transition metal and the boron, so that a compound including the transition metal and the boron has good structural stability and high-temperature resistance performance, to further improve the energy retention rate of the battery.

In some implementations, the boron-containing alloy includes at least one of CoBₙ, HfBₙ, ZrBₙ, TiBₙ, and WBₙ, and 0<n≤3.

In the foregoing solution, CoBₙ, HfBₙ, ZrBₙ, TiBₙ, and WBₙ, 0<n≤3, are disposed on the surface of the matrix 311 as the coating layer 312, and the coating layer 312 and the matrix 311 jointly form the positive electrode active material 31. CoBₙ, HfBₙ, ZrBₙ, TiBₙ, and WBₙ not only have good structural stability and high-temperature resistance performance, but also have easily obtained and prepared raw materials. In this way, cycle performance of the battery can be improved, and wide application of the battery is facilitated.

In some implementations, the boron-containing alloy further includes lithium and oxygen.

In the foregoing solution, when the boron-containing alloy including the transition metal, the lithium, and the oxygen is disposed on the surface of the matrix 311 as the coating layer 312, and the coating layer 312 and the matrix 311 jointly serve as the positive electrode active material 31 of the lithium battery, the coating layer releases lithium ions in the long cycle of the battery. This part of lithium ions may serve as active lithium ions to participate in reaction of the battery, so as to compensate for consumption of lithium ions of the battery in the long cycle, and further reduce the attenuation of the battery in the long cycle and improve the cycle performance of the battery.

In some implementations, micro-stress of the positive electrode active material 31 ranges from 0.05% to 1%, and optionally, ranges from 0.1% to 0.5%.

In the foregoing solution, the micro-stress of the positive electrode active material is maintained in a range of 0.05% to 1%, in particular, from 0.1% to 0.5%, so that overall flexibility of the positive electrode active material can be improved, and a case in which a fatigue phenomenon occurs on the positive electrode active material 31, resulting in increasingly difficult deintercalation of the lithium ions in the positive electrode active material 31, is avoided. In other words, in the long cycle of the battery, the deintercalation of the lithium ions in the positive electrode active material may be easier, to further reduce capacity attenuation of the battery and improve the cycle performance.

It should be noted herein that the micro-stress of the material refers to stress between micro-structures of the material. A scale of action of the micro-stress is at an order of magnitude the same as that of a grain size, so that intra-grain or inter-grain balance is maintained.

In some implementations, a peak intensity ratio of Mn-O to Ni-O in the positive electrode active material ranges from 20 to 50, and optionally, ranges from 25 to 35.

In the foregoing solution, the peak intensities of Mn-O and Ni-O in the positive electrode active material are maintained in a range of 20 to 50, in particular, from 25 to 35, so that strong structural stability of the surface of the positive electrode active material can be ensured, to improve performance stability in the long cycle of the battery.

In some implementations, a coating content of the coating layer 312 ranges from 200 ppm to 15000 ppm, and optionally, ranges from 500 ppm to 10000 ppm, based on a ratio of a weight of a metal element in the coating layer 312 to a total weight of the matrix 311.

In the foregoing solution, the coating content of the coating layer 312 in the positive electrode active material 31 is maintained in a range of 200 ppm to 15000 ppm, in particular, from 500 ppm to 10000 ppm, so that not only the coating layer 312 performs a function, but also costs are reduced, and an unnecessary waste of the coating layer 312 is avoided.

In some implementations, residual alkali on a surface of the positive electrode active material 31 ranges from 200 ppm (w/w) to 2000 ppm (w/w), and optionally, ranges from 500 ppm (w/w) to 1000 ppm (w/w).

In the foregoing solution, when the residual alkali on the surface of the positive electrode active material 31 ranges from 200 ppm (w/w) to 2000 ppm (w/w), in particular, from 500 ppm (w/w) to 1000 ppm (w/w), initial coulombic efficiency and a discharge gram capacity of the battery can be improved, so that the energy density of the battery is improved.

In some implementations, a specific surface area of the positive electrode active material 31 ranges from 0.5 m²/g to 9 m²/g, and optionally, ranges from 0.7 m²/g to 3.5 m²/g.

In the foregoing solution, the specific surface area of the positive electrode active material 31 ranges from 0.5 m²/g to 9 m²/g, in particular, from 0.7 m²/g to 3.5 m²/g, to help normal deintercalation of the lithium ions in the positive electrode active material 31.

In some implementations, an oxygen defect of the positive electrode active material 31 ranges from 1.5 to 4, and optionally, ranges from 1.8 to 3.5.

In the foregoing solution, the oxygen defect of the positive electrode active material 31 ranges from 1.5 to 4, in particular, from 1.8 to 3.5, to help further improve the migration dynamics of the lithium ions, and further improve the cycle performance and the energy density of the battery.

It should be noted herein that the oxygen defect is a defect of an oxygen element in an oxide material. The defect may be a quantity defect, or may be a morphology defect.

In some implementations, a volume average particle size Dv50 of the positive electrode active material 31 ranges from 2 µm to 20 µm, and optionally, ranges from 5 µm to 12 µm.

In the foregoing solution, the volume average particle size Dv50 of the positive electrode active material 31 is maintained in a range of 2 µm to 20 µm, in particular, from 5 µm to 12 µm, so that the battery can have a high discharge gram capacity and high initial coulombic efficiency, and a case in which the positive electrode active material 31 becomes loose, resulting in unstable deintercalation of the lithium ions in the loose positive electrode active material, can be avoided.

It should be noted herein that the volume average particle size Dv50 herein means that, in the positive electrode active material 31, particles whose sizes are greater than the particle size and particles whose sizes are less than the particle size each account for 50%.

In some implementations, a compaction density of the positive electrode active material 31 ranges from 2 g/cm³ to 3.5 g/cm³, and optionally, ranges from 2.6 g/cm³ to 3.5 g/cm³.

In the foregoing solution, if the compaction density of the positive electrode active material 31 is excessively low, an electrolyte solution may be infiltrated into the positive electrode active material 31, causing serious side reaction. As a result, the battery severely attenuates in the long cycle. The compaction density of the positive electrode active material 31 ranges from 2 g/cm³ to 3.5 g/cm³, in particular, from 2.6 g/cm³ to 3.5 g/cm³, to help further improve the energy density of the battery.

This application further provides a method for preparing a positive electrode active material. The method includes:
providing a matrix, where a chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0;
dispersing the matrix into an acidic solution and performing stirring, to obtain a matrix mixed solution, where PH of the acidic solution ranges from 2 to 3;
curing and drying the matrix mixed solution, to obtain matrix mixed powders;
mixing the matrix mixed powders with powders of a coating layer, to obtain a positive electrode active material precursor; and
sintering the positive electrode active material precursor, to obtain a positive electrode active material, where the positive electrode active material includes: the matrix, where the chemical formula of the matrix is Li[LiₓNiₐCo_{b}Mn_{c}M_{d}]O₂, M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and the coating layer, where the coating layer is disposed on a surface of the matrix, and the coating layer includes boron-containing alloy.

In the foregoing solution, after the matrix is put into the acidic solution whose PH value ranges from 1 to 3 and processed, the matrix is then mixed with the powders of the coating layer, so that residual alkali on the surface of the matrix can be removed in a moderate manner, to avoid dissolution of an active material in the positive electrode active material. This helps improve a gram capacity of a battery, to improve an energy density of the battery.

In some implementations, acid in the acidic solution includes at least one of sulphuric acid, nitric acid, ammonium persulfate, citric acid, oxalic acid, sodium citrate, ammonium citrate, ammonium citrate dibasic, alpha hydroxy acid, salicylic acid, succinic acid, or succinic anhydride.

In the foregoing solution, the acid in the acidic solution includes at least one of sulphuric acid, nitric acid, ammonium persulfate, citric acid, oxalic acid, sodium citrate, ammonium citrate, ammonium citrate dibasic, alpha hydroxy acid, salicylic acid, succinic acid, or succinic anhydride, in other words, the matrix is processed in the acidic solution including any one of the foregoing acid, so that an active material in the matrix is not dissolved because the acidic solution is moderate.

In some implementations, the acidic solution further includes ethanol or water.

In the foregoing solution, the acidic solution further includes ethanol or water. Ethanol and water are both good solvents for dissolving acid such as succinic acid or succinic anhydride. The acidic solution includes ethanol or water, so that the acid such as succinic acid or succinic anhydride is uniformly and sufficiently dissolved. Therefore, the matrix is uniformly processed.

In some implementations, a mass ratio of the acidic solution to the matrix ranges from 6 to 35, and optionally, ranges from 10 to 20.

In the foregoing solution, the mass ratio of the acidic solution to the matrix ranges from 6 to 35, in particular, from 10 to 20, so that the residual alkali on the surface of the matrix can be sufficiently processed.

In some implementations, a mass percentage of the acid in the acidic solution ranges from 0.1% to 30%, and optionally, ranges from 10% to 20%.

In the foregoing solution, the mass percentage of the acid in the acidic solution ranges from 0.1% to 30%, in particular, from 10% to 20%, so that the residual alkali on the surface of the matrix can be removed in a moderate manner.

In some implementations, the positive electrode active material precursor is sintered in an oxygen atmosphere or an inert gas atmosphere.

In the foregoing solution, the positive electrode active material precursor is sintered in the oxygen atmosphere or the inert gas atmosphere, so that unnecessary side reaction can be avoided.

In some implementations, a temperature of the sintering in the inert gas atmosphere ranges from 250°C to 400°C.

In the foregoing solution, when the positive electrode active material precursor is sintered by using inert gas, the temperature of the sintering is maintained in a range of 250°C to 400°C, so that the positive electrode active material precursor can be completely sintered.

In some implementations, a temperature of the sintering in the oxygen atmosphere ranges from 500°C to 700°C.

In the foregoing solution, when the positive electrode active material precursor is sintered by using oxygen, the temperature of the sintering is maintained in a range of 500°C to 700°C, so that the positive electrode active material precursor can be completely sintered.

In some implementations, duration of the sintering ranges from 3 h to 10 h.

In the foregoing solution, the duration for which the positive electrode active material precursor is sintered ranges from 3 h to 10 h, so that the positive electrode active material precursor can be completely sintered.

### [Positive electrode plate]

The positive electrode plate includes a positive electrode current collector and a positive electrode film layer disposed on at least one surface of the positive electrode current collector, and the positive electrode film layer includes the positive electrode active material in any one of the foregoing embodiments.

In an example, the positive electrode current collector has two opposite surfaces in a thickness direction thereof, and the positive electrode film layer is disposed on either or both of the two opposite surfaces of the positive electrode current collector.

In some implementations, the positive electrode current collector may be a metal foil or a composite current collector. For example, as a metal foil, an aluminum foil may be used. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some implementations, the positive electrode film layer optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer optionally includes a conductive agent. In an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared as follows: dispersing the above components for preparing the positive electrode plate, for example, the positive electrode active material, the conductive agent, the binder, and any other components, in a solvent (for example N-methylpyrrolidone) to form a positive electrode slurry; and coating the positive electrode slurry on a positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector, and the negative electrode film layer includes a negative electrode active material.

In an example, the negative electrode current collector has two opposite surfaces in a thickness direction thereof, and the negative electrode film layer is disposed on either or both of the two opposite surfaces of the negative electrode current collector.

In some implementations, the negative electrode current collector may be a metal foil or a composite current collector. For example, as a metal foil, a copper foil may be used. The composite current collector may include a polymer material substrate layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

In some implementations, the negative electrode active material may be a negative electrode active material that is well-known in the art and that is used for a battery. In an example, the negative electrode active material may include at least one of the following materials: artificial graphite, natural graphite, soft carbon, hard carbon, a silicon-based material, a tin-based material and lithium titanate, etc. The silicon-based material may be at least one selected from elemental silicon, silicon oxide, a silicon-carbon composite, a silicon-nitrogen composite, and silicon alloy. The tin-based material may be at least one selected from elemental tin, a tin oxide compound, and tin alloy. However, this application is not limited to such materials, and may alternatively use other conventional materials that can be used as the negative electrode active material of the battery. Only one or a combination of two or more of these negative electrode active materials may be used.

In some implementations, the negative electrode film layer optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS).

In some implementations, the negative electrode film layer optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer optionally includes another additive such as a thickener (for example, sodium carboxymethyl cellulose (CMC-Na)).

In some implementations, the negative electrode plate may be prepared as follows: dispersing components for preparing the negative electrode plate, for example, a negative electrode active material, a conductive agent, a binder, and any other components into a solvent (for example, deionized water) to form a negative electrode slurry; coating the negative electrode slurry on the negative electrode current collector, followed by processes such as drying and cold pressing, to obtain the negative electrode plate.

### [Electrolyte solution]

The electrolyte solution plays a role of conducting ions between the positive electrode plate and the negative electrode plate.

In some implementations, the electrolyte solution further includes a solvent. The solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

In some implementations, the electrolyte solution optionally includes an additive. For example, the additive may include a negative electrode film forming additive, a positive electrode film forming additive, and may further include an additive that can improve particular battery performance, for example, an additive that improves battery overcharging performance, an additive that improves high or low temperature performance of the battery, or the like.

### [Separator]

In some implementations, the lithium battery further includes a separator. A type of the separator is not particularly limited in this application, and any well-known separator with a porous structure having good chemical stability and mechanical stability may be selected.

In some implementations, a material of the separator may be at least one selected from glass fiber, non-woven fabric, polyethylene, polypropylene, or polyvinylidene fluoride. The separator may be a single-layer film or a multi-layer composite film without special limitations. When the separator is a multi-layer composite film, materials of the layers may be the same or different without special limitations.

In some implementations, the positive electrode plate, the negative electrode plate, and the separator may be made into an electrode assembly by using a winding process or a laminating process.

In some implementations, the lithium battery may include outer packaging. The outer packaging may be configured to encapsulate the electrode assembly and the electrolyte.

In some implementations, the outer packaging of the lithium battery may be a hard shell, for example, a hard plastic case, an aluminum shell, or a steel shell. The outer packaging of the lithium battery may alternatively be a soft package such as a pouch-type soft package. A material of the soft package may be plastic, and examples of plastic may include polypropylene, polybutylene terephthalate, polybutylene succinate, and the like.

A shape of the lithium battery is not specifically limited in this application, and the lithium battery may be cylindrical, cuboid, or in any other shape. For example, FIG. 2 shows a battery cell 300 having a cuboid structure.

In addition, a type of the lithium battery is not limited in this application. The battery cell 300 may be a lithium-ion battery or a lithium metal battery. The following embodiments are described by using the lithium-ion battery as an example.

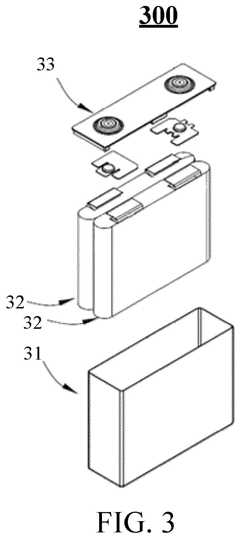

FIG. 3 is a schematic diagram of a structure of a battery cell according to another implementation of this application. In some implementations, referring to FIG. 3, outer packaging may include a housing 31 and a cover plate 33. The housing 31 may include a bottom plate and a side plate connected to the bottom plate. The bottom plate and the side plate enclose to form an accommodation cavity. The housing 31 has an opening communicating with the accommodation cavity, and the cover plate 33 can cover the opening, to seal the accommodation cavity. A positive electrode, a negative electrode, and a solid electrolyte may form the electrode assembly 32 by using a winding process or a laminating process. The electrode assembly 32 is encapsulated in the accommodation cavity. A quantity of electrode assemblies 32 included in the battery cell 300 may be one or more, and may be selected by a person skilled in the art based on a specific actual requirement.

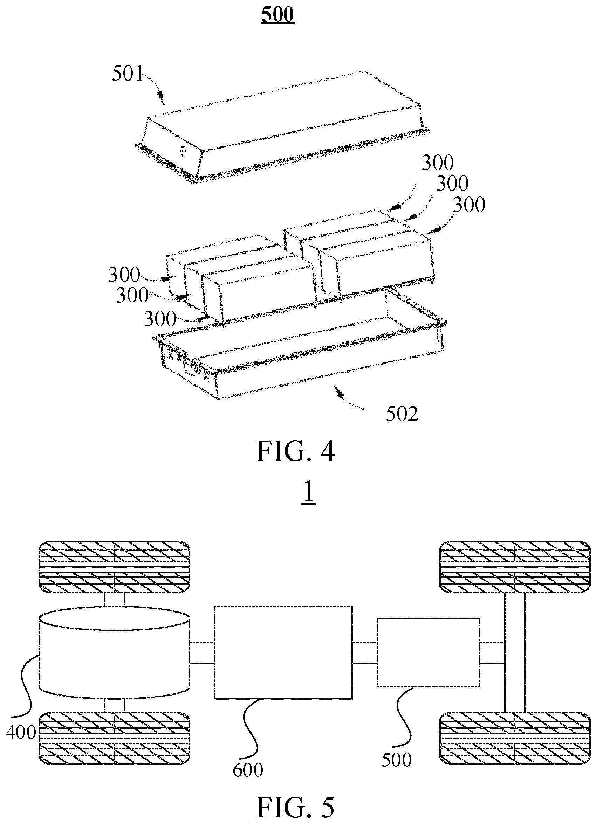

FIG. 4 is a schematic diagram of a structure of a battery 500 according to an implementation of this application. As shown in FIG. 4, in the battery 500, a plurality of battery cells 300 may be arranged sequentially along a length direction of the battery 500. Certainly, the plurality of battery cells 300 may alternatively be arranged in any other manner. The plurality of battery cells 300 may further be fixed by using fasteners.

Still referring to FIG. 4, the battery 500 may include a battery box and the plurality of battery cells 300 arranged in the battery box. The battery box includes an upper box body 501 and a lower box body 502. The upper box body 501 can cover the lower box body 502 to form a closed space for accommodating the battery cells 300. The plurality of battery cells 300 may be arranged in the battery box in any manner.

In some implementations, the battery cell may first be assembled into a battery module, and the battery module may include one or more battery cells. A specific quantity may be selected by a person skilled in the art according to use and a capacity of the battery module.

In some embodiments, the battery module may further be assembled into a battery, and the battery may include one or more battery modules. A specific quantity may be selected by a person skilled in the art according to use and a capacity of the battery.

In addition, this application further provides a power consuming apparatus. The power consuming apparatus includes at least one of the positive electrode active material, the battery cell, or the battery provided in this application. The battery cell or the battery may be used as a power supply of the power consuming apparatus, or may be used as an energy storage unit of the power consuming apparatus. The power consuming apparatus may include, but is not limited to, a mobile device (for example, a mobile phone or a laptop), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

For example, FIG. 5 is a schematic diagram of a structure of a vehicle according to an implementation of this application. As shown in FIG. 5, the vehicle 1 may be a fuel vehicle, a gas vehicle, or a new energy vehicle. The new energy vehicle may be a pure electric vehicle, a hybrid electric vehicle, an extended-range electric vehicle, or the like. A motor 400, a controller 600 and a battery 500 may be arranged inside the vehicle 1, and the controller 600 is configured to control the battery 500 to supply power to the motor 400. For example, the battery 500 may be arranged on the bottom, in the front, or in the rear of the vehicle 1. The battery 500 may be configured to supply power to the vehicle 1. For example, the battery 500 may be used as an operating power supply of the vehicle 1 and used for a circuit system of the vehicle 1, for example, may be used for operating electricity requirements during starting, navigation, and operation of the vehicle 1. In another embodiment of this application, the battery 500 can be used not only as the operating power supply of the vehicle 1, but also as a driving power supply of the vehicle 1, to alternatively or partially replace fuel or natural gas to provide driving power for the vehicle 1.

As the power consuming apparatus, a positive electrode active material, a battery cell, or a battery may be selected based on a use requirement of the power consuming apparatus.

The power consuming apparatus is a pure electric vehicle, a hybrid electric vehicle, a plug-in hybrid electric vehicle, or the like. To meet requirements of the power consuming apparatus for high power and a high energy density of the battery, the battery cell or the battery may be used.

Another example of the apparatus may be a mobile phone, a tablet computer, a notebook computer, or the like. The device usually needs to be light and thin, and the battery cell may be used as a power supply.

### [Embodiments]

The embodiments of this application are described below. The embodiments described below are exemplary and only used to explain this application, and should not be construed as a limitation on this application. When specific technologies or conditions are not indicated in the embodiments, the embodiments are carried out according to technologies or conditions described in the literature in the art or according to the product specifications. The used reagents or instruments without manufacturer indicated are all conventional products that may be purchased in the market.

### [Embodiment 1]

### 1. Preparation of a lithium-ion battery

### (1.1) Preparation of a positive electrode plate

(1.11) Preparation of a matrix: Ni_{0.35}Co_{0.05}Mn_{0.60}(OH)₂ and lithium hydroxide were weighted at a molar ratio of 1.0:1.25 and put into a high-speed mixer for mixing. A material obtained through the mixing was sintered in an air atmosphere for 10 h to 15 h, where a sintering temperature ranges from 780°C to 900°C, and a temperature rising rate ranges from 2°C/min to 5°C/min, to obtain a positive electrode intermediate product 1 after first sintering. Mechanical grinding and vibrating and screening processing were performed on the positive electrode intermediate product 1, to obtain a lithium-rich manganese-based positive electrode material matrix, which is referred to as a matrix for short below. A chemical formula of the matrix was Li[Li_{0.11}Ni_{0.31}Co_{0.04}Mn_{0.54}]O₂.

(1.12) Preparation of a positive electrode active material: Ammonium citrate was dissolved in deionized water, to prepare an acidic solution whose PH was 2.57. Then, stirring and acid pickling were performed for 0.5 h on the acidic solution and a matrix weighted according to a specific liquid-to-solid ratio, and stirring was performed at a rate of 900 r/min. Suction filtration, washing with deionized water, and suction filtration were performed after the acid pickling, and then drying was performed for 10 h at 80°C. Then, mechanical grinding and vibrating and screening processing were performed, to obtain matrix mixed powders. The matrix mixed powders obtained in the foregoing steps and cobalt boride (CoB) were mixed at a mass ratio of 1:0.003 and put into a furnace, and secondary sintering was performed in an air atmosphere for 10 h, where a sintering temperature was 450°C, and a temperature rising rate was 2°C/min. After mechanical grinding and vibrating and screening processing were performed on a material obtained through the sintering, a lithium-sodium composite manganese-based positive electrode active material was obtained. Micro-stress of the positive electrode active material was 0.30%, a peak intensity ratio of Mn-O to Ni-O was 30, a coating content of CoB was 2000 ppm, residual alkali on a surface was 500 ppm (w/w), a specific surface area was 0.8 m²/g, an oxygen defect was 2, and a particle size was 7 µm.

(1.13) Preparation of a positive electrode plate: Secondary dry-material mixing was performed on the foregoing prepared positive electrode active material, a conductive agent acetylene black, and a binder polyvinylidene fluoride (PVDF) for 30 min at a mass ratio of 96:2:2. Then, a solvent N-methylpyrrolidone (NMP) was added, and rapid stirring was performed under a vacuum condition, to form a positive electrode slurry. The positive electrode slurry was uniformly coated on both sides of an aluminum foil whose thickness was 12 µm, and a coated electrode plate was dried in an oven at 100°C to 130°C for half an hour and taken out, to obtain a positive electrode plate. A load of the positive electrode active material on the positive electrode plate was 21.5 mg/cm².

(1.2) Preparation of a negative electrode: A negative electrode active material artificial graphite, hard carbon, a conductive agent acetylene black, a binder styrene-butadiene rubber (SBR), and a thickener sodium carboxymethyl cellulose (CMC) were prepared at a weight ratio of 90:5:2:2:1, and were fully stirred and uniformly mixed in a deionized water solvent, to obtain a negative electrode slurry. The negative electrode slurry was coated on a copper foil, followed by drying and cold pressing, to obtain a negative electrode plate.

(1.3) Separator: A polyethylene (PE) film was used as a separator.

(1.4) Electrolyte solution: 1mol/L LiPF₆/(EC+EMC+DMC), where a volume ratio of EC, EMC, and DMC in a solvent was 1:1:1.

(1.5) Assembly of a lithium-ion battery: The positive electrode plate, the separator, and the negative electrode plate were sequentially stack and wound, to obtain an electrode assembly. The electrode assembly was disposed in an aluminum housing, a top cover was welded, the electrolyte solution is injected after drying, and processes such as static disposing, forming, sealing and welding, aging, and capacity were performed, to obtain the lithium-ion battery.

### [Embodiment 2]

Preparation of a lithium-ion battery of Embodiment 2 is basically the same as that of Embodiment 1, and a difference lies in that, during preparation of a positive electrode active material, a matrix material and TiB₂ were mixed at a mass ratio of 1:0.003.

### [Embodiment 3]

Preparation of a lithium-ion battery of Embodiment 3 is basically the same as that of Embodiment 1, and a difference lies in that, during preparation of a positive electrode active material, a matrix material and HfB₂ were mixed at a mass ratio of 1:0.003.

### [Embodiment 4]

Preparation of a lithium-ion battery of Embodiment 4 is basically the same as that of Embodiment 1, and a difference lies in that micro-stress of a positive electrode active material was 0.10%.

### [Embodiment 5]

Preparation of a lithium-ion battery of Embodiment 5 is basically the same as that of Embodiment 1, and a difference lies in that micro-stress of a positive electrode active material was 0.50%.

### [Embodiment 6]

Preparation of a lithium-ion battery of Embodiment 6 is basically the same as that of Embodiment 1, and a difference lies in that a peak intensity ratio of Mn-O to Ni-O of a positive electrode active material was 35.

### [Embodiment 7]

Preparation of a lithium-ion battery of Embodiment 7 is basically the same as that of Embodiment 1, and a difference lies in that a peak intensity ratio of Mn-O to Ni-O of a positive electrode active material was 25.

### [Embodiment 8]

Preparation of a lithium-ion battery of Embodiment 8 is basically the same as that of Embodiment 1, and a difference lies in that a coating content of CoB was 1000 ppm.

### [Embodiment 9]

Preparation of a lithium-ion battery of Embodiment 9 is basically the same as that of Embodiment 1, and a difference lies in that a coating content of CoB was 5000 ppm.

### [Embodiment 10]

Preparation of a lithium-ion battery of Embodiment 10 is basically the same as that of Embodiment 1, and a difference lies in that residual alkali on a surface of a positive electrode active material was 800 ppm (w/w).

### [Embodiment 11]

Preparation of a lithium-ion battery of Embodiment 11 is basically the same as that of Embodiment 1, and a difference lies in that residual alkali on a surface of a positive electrode active material was 1000 ppm (w/w).

### [Embodiment 12]

Preparation of a lithium-ion battery of Embodiment 12 is basically the same as that of Embodiment 1, and a difference lies in that a specific surface area of a positive electrode active material was 2.3 m²/g.

### [Embodiment 13]

Preparation of a lithium-ion battery of Embodiment 13 is basically the same as that of Embodiment 1, and a difference lies in that a specific surface area of a positive electrode active material was 1.5 m²/g.

### [Embodiment 14]

Preparation of a lithium-ion battery of Embodiment 14 is basically the same as that of Embodiment 1, and a difference lies in that a specific surface area of a positive electrode active material was 3 m²/g.

### [Embodiment 15]

Preparation of a lithium-ion battery of Embodiment 15 is basically the same as that of Embodiment 1, and a difference lies in that an oxygen defect of a positive electrode active material is 2.5.

### [Embodiment 16]

Preparation of a lithium-ion battery of Embodiment 16 is basically the same as that of Embodiment 1, and a difference lies in that a particle size of a positive electrode active material was 10 µm.

### [Embodiment 17]

Preparation of a lithium-ion battery of Embodiment 17 is basically the same as that of Embodiment 1, and a difference lies in preparation of a matrix material: Ni_{0.35}Co_{o.05}Mn_{0.60}(OH)₂, lithium hydroxide, and MgO were weighted at a molar ratio of 1.0:1.25:0.0025 and put into a high-speed mixer for mixing. A material obtained through the mixing was sintered in an air atmosphere for 10 h to 15 h, where a sintering temperature ranges from 780°C to 900°C, and a temperature rising rate ranges from 2°C/min to 5°C/min, to obtain a positive electrode intermediate product 1 after first sintering. Mechanical grinding and vibrating and screening processing were performed on the positive electrode intermediate product 1, to obtain a lithium-rich manganese-based positive electrode material matrix, which is referred to as a matrix for short below. A chemical formula of the matrix was Li[Li_{0.11}Ni_{0.31}Co_{0.04}Mn_{0.535}Mg_{0.005}]O₂.

### [Embodiment 18]

Preparation of a lithium-ion battery of Embodiment 18 is basically the same as that of Embodiment 17, and a difference lies in that, during preparation of a positive electrode active material, a matrix material and TiB₂ were mixed at a mass ratio of 1:0.003.

### [Embodiment 19]

A method for preparing a lithium-ion battery of Embodiment 19 is basically the same as that of Embodiment 1, and a difference lies in preparation of a matrix material: Ni_{0.35}Co_{0.05}Mn_{0.60}(OH)₂, lithium hydroxide, and MoS₂ were weighted at a molar ratio of 1.0:1.25:0.0025 and put into a high-speed mixer for mixing. A material obtained through the mixing was sintered in an air atmosphere for 10 h to 15 h, where a sintering temperature ranges from 780°C to 900°C, and a temperature rising rate ranges from 2°C/min to 5°C/min, to obtain a positive electrode intermediate product 1 after first sintering. Mechanical grinding and vibrating and screening processing were performed on the positive electrode intermediate product 1, to obtain a lithium-rich manganese-based positive electrode material matrix, which is referred to as a matrix for short below. A chemical formula of the matrix was Li[Li_{0.11}Ni_{0.31}Co_{0.04}Mn_{0.535}Mo_{0.005}]O₂.

### [Embodiment 20]

Preparation of a lithium-ion battery of Embodiment 20 is basically the same as that of Embodiment 1, and a difference lies in that a peak intensity ratio of Mn-O to Ni-O of a positive electrode active material was 10.

### [Embodiment 21]

Preparation of a lithium-ion battery of Embodiment 21 is basically the same as that of Embodiment 1, and a difference lies in that a peak intensity ratio of Mn-O to Ni-O of a positive electrode active material was 100.

### [Embodiment 22]

Preparation of a lithium-ion battery of Embodiment 22 is basically the same as that of Embodiment 1, and a difference lies in that a coating content of CoB was 100 ppm.

### [Embodiment 23]

Preparation of a lithium-ion battery of Embodiment 23 is basically the same as that of Embodiment 1, and a difference lies in that a coating content of CoB was 20000 ppm.

### [Comparative example 1]

Preparation of a lithium-ion battery of Comparative example 1 is basically the same as that of Embodiment 1, and a difference lies in that a positive electrode active material includes only a matrix material.

### [Comparative example 2]

Preparation of a lithium-ion battery of Comparative example 2 is basically the same as that of Embodiment 1, and a difference lies in that, during preparation of a positive electrode active material, a matrix material and Cr₂O₃ were mixed at a mass ratio of 1:0.003.

### [Comparative example 3]

Preparation of a lithium-ion battery of Comparative example 3 is basically the same as that of Embodiment 1, and a difference lies in that, during preparation of a positive electrode active material, a matrix material and MgO were mixed at a mass ratio of 1:0.003.

### [Comparative example 4]

Preparation of a lithium-ion battery of Comparative example 4 is basically the same as that of Embodiment 1, and a difference lies in that, during preparation of a matrix, Ni_{0.29}Mn_{0.71}(OH)₂ and lithium hydroxide were weighted at a molar ratio of 1.0:1.30 and put into a high-speed mixer for mixing, to obtain a matrix whose chemical formula is Li[Li_{0.17}Ni_{0.27}Mn_{0.56}]O₂.

### 2. Representation of a positive electrode active material

(2.1) Measurement of micro-stress: MS%=(βₕₖₗ×Cosθₕₖₗ)/(4sinθₕₖₗ). θₕₖₗ is a diffraction angle of a crystal face of a lithium-sodium composite manganese-based positive electrode material (hkl) in an XRD diffraction pattern, and βₕₖₗ is a full width at half maximum of the crystal face of the lithium-sodium composite manganese-based positive electrode material (hkl) in the XRD diffraction pattern.

(2.2) Measurement of peak intensities of Mn-O and Ni-O: A method for determining a peak intensity of Mn-O is an intensity of a diffraction peak from 600 cm⁻¹ to 620 cm⁻¹ in an infrared pattern, and a method for determining a peak intensity of Ni-O is an intensity of a diffraction peak from 730 cm⁻¹ to 750 cm⁻¹ in the infrared pattern.

(2.3) Measurement of residual alkali on a surface: Refer to GB/T 9736-2008 a general method for measuring acidity and alkalinity of a chemical agent. 10 g to 30 g of powders were weighed and obtained, 100 ml of pure water was added and stirring was performed for 30 min, static disposing was performed for 10 min, and then a certain amount of filtrate was pipetted after suction filtration. A hydrochloric acid standard solution of 0.05 mol/L was selected, bubbles in a burette were expelled through draining, and a corresponding sensor and program were selected to start a potentiometric titration test.

(2.4) Measurement of a specific surface area: For details, refer to the GB/T 19587-2004 standard.

(2.41) Pre-processing: A proper quantity of samples were loaded by using a dedicated sample tube, heating, evacuation, and degassing were performed for 2 h, a total mass was calculated after a temperature was cooled to a room temperature, and a mass of the sample tube was subtracted to obtain a sample mass.

(2.42) Test: The sample tube was loaded into a work station, amounts of gas adsorbed on a solid surface at different absorption pressures were measured at a constant low temperature, and a test sample monolayer absorption amount was calculated based on a BET multilayer absorption theory and a formula thereof, to calculate a specific surface area of a solid sample per unit mass.

(2.43) Absorbed gas: nitrogen; an absorption pressure point: 0.05, 0.10, 0.15, 0.20, 0.25, and 0.30; and a test atmosphere: a high-purity liquid-nitrogen atmosphere.

(2.5) Test of an oxygen defect index: A range of 35° to 50° in an XRD pattern of a tested sample was scanned at a low speed (which is less than 2°/min), an image was processed according to smoothing and filtering, to obtain areas I₁₀₁ and I₀₁₂ of diffraction peaks of a crystal face (101) and a crystal face (012), and an oxygen defect index was calculated through (I₁₀₁/I₀₁₂)^{0.5}.

(2.6) Measurement of a volume average particle size Dv50: A Mastersizer 2000 (MasterSizer 2000) laser particle-size analyzer is used. For details, refer to GB/T19077-2016/ISO 13320:2009. A proper quantity of to-be-tested samples (provided that it is ensured that a sample concentration has a shading rate ranging from 8% to 12%) were obtained, 20 ml of deionized water was added, and outer sonication was simultaneously performed for 5 min (53 KHz/120 W), to ensure that the samples were completely dispersed. Then, the samples were measured according to the GB/T19077-2016/ISO 13320:2009 standard.

(2.7) Measurement of a compaction density: For details, refer to GB/T 24533-2009. A certain quantity of powders were obtained and disposed in a compaction-dedicated die, and then the die was disposed on a compaction density instrument. Different pressures were set, and thicknesses (which were thicknesses after decompression) of the powders at the different pressures can be read on the instrument. A compaction density was calculated through ρ=m/v.

**Table 1 Specific parameters in Embodiments 1 to 23 and Comparative examples 1 to 4**

| Group | Matrix | Coating layer | Micro-stress | Peak intensity ratio of Mn-O to Ni-O | Coating content (ppm) | Residual alkali on a surface (ppm(w/w)) | Specific surface area (m²/g) | Oxygen defect | Particle size (µm) |
|---|---|---|---|---|---|---|---|---|---|
| Embodiment 1 | Li[Li_{0.11}Ni_{0.31}Co_{0.04}Mn_{0.54}]O₂ | CoB | 0.30% | 30 | 2000 | 500 | 0.8 | 2 | 7 |
| Embodiment 2 | Li[Li_{0.11}Ni_{0.31}Co_{0.04}Mn_{0.54}]O₂ | TiB₂ | 0.30% | 30 | 2000 | 500 | 0.8 | 2 | 7 |
| Embodiment 3 | Li[Li_{0.11}Ni_{0.31}Co_{0.04}Mn_{0.54}]O₂ | HfB₂ | 0.30% | 30 | 2000 | 500 | 0.8 | 2 | 7 |
| Embodiment 4 | Li[Li_{0.11}Ni_{0.31}Co_{0.04}Mn_{0.54}]O₂ | CoB | 0.10% | 30 | 2000 | 500 | 0.8 | 2 | 7 |
| Embodiment 5 | Li[Li_{0.11}Ni_{0.31}Co_{0.04}Mn_{0.54}]O₂ | CoB | 0.50% | 30 | 2000 | 500 | 0.8 | 2 | 7 |
| Embodiment 6 | Li[Li_{0.11}Ni_{0.31}Co_{0.04}Mn_{0.54}]O₂ | CoB | 0.30% | 35 | 2000 | 500 | 0.8 | 2 | 7 |
| Embodiment 7 | Li[Li_{0.11}Ni_{0.31}Co_{0.04}Mn_{0.54}]O₂ | CoB | 0.30% | 25 | 2000 | 500 | 0.8 | 2 | 7 |
| Embodiment 8 | Li[Li_{0.11}Ni_{0.31}Co_{0.04}Mn_{0.54}]O₂ | CoB | 0.30% | 30 | 1000 | 500 | 0.8 | 2 | 7 |
| Embodiment 9 | Li[Li_{0.11}Ni_{0.31}Co_{0.04}Mn_{0.54}]O₂ | CoB | 0.30% | 30 | 5000 | 500 | 0.8 | 2 | 7 |
| Embodiment 10 | Li[Li_{0.11}Ni_{0.31}Co_{0.04}Mn_{0.54}]O₂ | CoB | 0.30% | 30 | 2000 | 800 | 0.8 | 2 | 7 |
| Embodiment 11 | Li[Li_{0.11}Ni_{0.31}Co_{0.04}Mn_{0.54}]O₂ | CoB | 0.30% | 30 | 2000 | 1000 | 0.8 | 2 | 7 |
| Embodiment 12 | Li[Li_{0.11}Ni_{0.31}Co_{0.04}Mn_{0.54}]O₂ | CoB | 0.30% | 30 | 2000 | 500 | 2.3 | 2 | 3.2 |
| Embodiment 13 | Li[Li_{0.11}Ni_{0.31}Co_{0.04}Mn_{0.54}]O₂ | CoB | 0.30% | 30 | 2000 | 500 | 1.5 | 2 | 7 |
| Embodiment 14 | Li[Li_{0.11}Ni_{0.31}Co_{0.04}Mn_{0.54}]O₂ | CoB | 0.30% | 30 | 2000 | 500 | 3 | 2 | 7 |
| Embodiment 15 | Li[Li_{0.11}Ni_{0.31}Co_{0.04}Mn_{0.54}]O₂ | CoB | 0.30% | 30 | 2000 | 500 | 0.8 | 2.5 | 7 |
| Embodiment 16 | Li[Li_{0.11}Ni_{0.31}Co_{0.04}Mn_{0.54}]O₂ | CoB | 0.30% | 30 | 2000 | 500 | 0.8 | 2.5 | 10 |
| Embodiment 17 | Li[Li_{0.11}Ni_{0.31}Co_{0.04}Mn_{0.535}Mg_{0.005}]O₂ | CoB | 0.30% | 30 | 2000 | 500 | 0.8 | 2 | 7 |
| Embodiment 18 | Li[Li_{0.11}Ni_{0.31}Co_{0.04}Mn_{0.535}Mg_{0.005}]O₂ | TiB₂ | 0.30% | 30 | 2000 | 500 | 0.8 | 2 | 7 |
| Embodiment 19 | Li[Li_{0.11}Ni_{0.31}Co_{0.04}Mn_{0.535}Mo_{0.005}]O₂ | CoB | 0.30% | 30 | 2000 | 500 | 0.8 | 2 | 7 |
| Embodiment 20 | Li[Li_{0.11}Ni_{0.31}Co_{0.04}Mn_{0.54}]O₂ | CoB | 0.30% | 10 | 2000 | 500 | 0.8 | 2.5 | 7 |
| Embodiment 21 | Li[Li_{0.11}Ni_{0.31}Co_{0.04}Mn_{0.54}]O₂ | CoB | 0.30% | 100 | 2000 | 500 | 0.8 | 2.5 | 7 |
| Embodiment 22 | Li[Li_{0.11}Ni_{0.31}Co_{0.04}Mn_{0.54}]O₂ | CoB | 0.30% | 30 | 100 | 500 | 0.8 | 2.5 | 7 |
| Embodiment 23 | Li[Li_{0.11}Ni_{0.31}Co_{0.04}Mn_{0.54}]O₂ | CoB | 0.30% | 30 | 20000 | 500 | 0.8 | 2.5 | 7 |
| Comparative example 1 | Li[Li_{0.11}Ni_{0.31}Co_{0.04}Mn_{0.54}]O₂ | / | 0.30% | 30 | / | 500 | 0.8 | 2 | 7 |
| Comparative example 2 | Li[Li_{0.11}Ni_{0.31}Co_{0.04}Mn_{0.54}]O₂ | Cr₂O₃ | 0.60% | 30 | 2000 | 500 | 0.8 | 2.5 | 7 |
| Comparative example 3 | Li[Li_{0.11}Ni_{0.31}Co_{0.04}Mn_{0.54}]O₂ | MgO | 0.60% | 30 | 2000 | 500 | 0.8 | 2.5 | 7 |
| Comparative example 4 | Li[Li_{0.17}Ni_{0.27}Mn_{0.56}]O₂ | CoB | 0.30% | 30 | 2000 | 500 | 0.8 | 2 | 7 |

### 3. Test of battery performance

### (3.1) Test of an energy retention rate

Under a constant temperature condition of 25°C and under a voltage from 2.5 V to 4.45 V, charging was performed at a 1C rate until the voltage was 4.45 V. Then, charging was performed at the constant voltage of 4.45 V until a current was less than or equal to 0.05 mA, and static disposing was performed for 5 min. Then, discharging was performed at the 1C rate until the voltage was 2.5 V, and discharging energy was recorded. The foregoing process was repeated, and an energy retention rate after 500 cycles was obtained, where the energy retention rate=discharging energy at the 1^{st} cycle/discharging energy after a specified quantity of cycles×100%. For a test result, refer to Table 2.

### (3.2) Test of an initial gram capacity

Under a constant temperature condition of 25°C, at 2.5 V to 4.55 V, charging was performed at 0.1C until a voltage was 4.55 V. Then, charging was performed at the constant voltage of 4.55 V until a current was less than or equal to 0.05 mA, and static disposing was performed for 2 min. In this case, a charging capacity was denoted as C₀. Then, discharging was performed at 0.1C until the voltage was 2.5 V. In this case, a discharging capacity was an initial gram capacity, and was denoted as D₀. For a test result, refer to Table 2.

**Table 2 Battery performance in Embodiments 1 to 23 and Comparative examples 1 to 4**

| Group | Energy retention rate | Initial gram capacity (mAh/g) |
|---|---|---|
| Embodiment 1 | 91.5% | 240 |
| Embodiment 2 | 92.0% | 231 |
| Embodiment 3 | 91.8% | 233 |
| Embodiment 4 | 92.5% | 239 |
| Embodiment 5 | 90.6% | 238 |
| Embodiment 6 | 91.1% | 245 |
| Embodiment 7 | 92.3% | 235 |
| Embodiment 8 | 90.7% | 243 |
| Embodiment 9 | 91.2% | 237 |
| Embodiment 10 | 90.5% | 241 |
| Embodiment 11 | 90.3% | 242 |
| Embodiment 12 | 90.3% | 256 |
| Embodiment 13 | 90.4% | 245 |
| Embodiment 14 | 90.1% | 248 |
| Embodiment 15 | 90.2% | 240 |
| Embodiment 16 | 91.1% | 239 |
| Embodiment 17 | 91.7% | 244 |
| Embodiment 18 | 91.5% | 247 |
| Embodiment 19 | 91.5% | 242 |
| Embodiment 20 | 88.7% | 235 |
| Embodiment 21 | 83.6% | 251 |
| Embodiment 22 | 89.1% | 244 |
| Embodiment 23 | 90.5% | 229 |
| Comparative example 1 | 85.6% | 223 |
| Comparative example 2 | 89.6% | 231 |
| Comparative example 3 | 91.5% | 227 |
| Comparative example 4 | 87.9% | 230 |

It can be learned based on Embodiments 1 to 23 and Comparative example 1 that, an energy retention rate after 500 circles and an initial gram capacity of a lithium-ion battery on which boron-containing alloy is coated are both higher than those of a lithium-ion battery on which no coating layer is coated. In other words, the energy retention rate and the initial gram capacity of the lithium-ion battery can be improved by coating the coating layer on a group material.

It can be learned based on Embodiments 1 to 3 and Embodiments 17 and 18 that, when different boron-containing alloy materials are coated on a surface of a matrix material, both the energy retention rate and the initial gram capacity of the lithium-ion battery can be improved.

It can be learned based on Embodiments 1, 17, and 19 that, when the coating layer is coated on surfaces of a plurality of matrix materials, both the energy retention rate and the initial gram capacity of the lithium-ion battery can be improved.

It can be learned based on Embodiments 1, 6 and 7, and 20 and 21 that, a peak intensity ratio of Mn-O to Ni-O of a positive electrode active material in the lithium-ion battery is maintained in a proper range, that is, from 20 to 50, to help improve the energy retention rate and the initial gram capacity of the lithium-ion battery.

It can be learned based on Embodiments 1, 8 and 9, and 22 and 23 that, a coating content of the coating layer of the positive electrode active material in the lithium-ion battery is maintained in a proper range, that is, from 200 ppm to 15000 ppm, to help improve the energy retention rate and the initial gram capacity of the lithium-ion battery.

It can be learned based on Embodiments 1 to 22 and Comparative examples 1 to 3 that, at least one of CoB, HfB₂, and TiB₂ is coated on the surface of the matrix material in the positive electrode active material, to help further improve the energy retention rate and the initial gram capacity of the lithium-ion battery.

It can be learned based on Embodiments 1 to 23 and Comparative example 4 that, the positive electrode active material includes a matrix whose chemical formula is Li[LiₓNiₐCo_{b}Mn_{c}M_{d}]O₂, where M includes at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0, to help further improve the energy retention rate and the initial gram capacity of the lithium-ion battery.

It can be learned based on the foregoing embodiments and comparative examples that, the coating layer is coated on the surface of the matrix material in the positive electrode active material, so that the lithium-ion battery can have both a good energy retention rate and a high initial gram capacity.

It should be noted that this application is not limited to the foregoing implementations. The foregoing implementations are merely exemplary, and implementations having substantially the same technical idea and the same effects within the scope of the technical solutions of this application are all included in the technical scope of this application. In addition, other implementations constructed by applying various modifications conceivable to those skilled in the art to the implementations and combining some of the constituent elements of the implementations without departing from the scope of the essence of this application are also included in the scope of this application.

## Claims

1. A positive electrode active material, comprising:
a matrix, wherein a chemical formula of the matrix is Li[LiₓNiₐCo_{b}Mn_{c}M_{d}]O₂, M comprises at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and
a coating layer, wherein the coating layer is disposed on a surface of the matrix, and the coating layer comprises boron-containing alloy.

2. The positive electrode active material according to claim 1, wherein the boron-containing alloy comprises boron and transition metal, and the transition metal comprises at least one of Co, Hf, Zr, and Ti.

3. The positive electrode active material according to claim 1 or 2, wherein the boron-containing alloy comprises at least one of CoBₙ, HfBₙ, ZrBₙ, TiBₙ, and WBₙ, and 0<n≤3.

4. The positive electrode active material according to any one of claims 1 to 3, wherein the boron-containing alloy further comprises lithium and oxygen.

5. The positive electrode active material according to any one of claims 1 to 4, wherein micro-stress of the positive electrode active material ranges from 0.05% to 1%, and optionally, ranges from 0.1% to 0.5%.

6. The positive electrode active material according to any one of claims 1 to 5, wherein a peak intensity ratio of Mn-O to Ni-O in the positive electrode active material ranges from 20 to 50, and optionally, ranges from 25 to 35.

7. The positive electrode active material according to any one of claims 1 to 6, wherein a coating content of the coating layer ranges from 200 ppm to 15000 ppm, and optionally, ranges from 500 ppm to 10000 ppm, based on a ratio of a weight of a metal element in the coating layer to a total weight of the matrix.

8. The positive electrode active material according to any one of claims 1 to 7, wherein residual alkali on a surface of the positive electrode active material ranges from 200 ppm (w/w) to 2000 ppm (w/w), and optionally, ranges from 500 ppm (w/w) to 1000 ppm (w/w).

9. The positive electrode active material according to any one of claims 1 to 8, wherein a specific surface area of the positive electrode active material ranges from 0.5 m²/g to 9 m²/g, and optionally, ranges from 0.7 m²/g to 3.5 m²/g.

10. The positive electrode active material according to any one of claims 1 to 9, wherein an oxygen defect of the positive electrode active material ranges from 1.5 to 4, and optionally, ranges from 1.8 to 3.5.

11. The positive electrode active material according to any one of claims 1 to 10, wherein a volume average particle size Dv50 of the positive electrode active material ranges from 2 µm to 20 µm, and optionally, ranges from 5 µm to 12 µm.

12. The positive electrode active material according to any one of claims 1 to 11, wherein a compaction density of the positive electrode active material ranges from 2 g/cm³ to 3.5 g/cm³, and optionally, ranges from 2.6 g/cm³ to 3.5 g/cm³.

13. A method for preparing a positive electrode active material, wherein the method comprises the following steps:
providing a matrix, wherein a chemical formula of the matrix is Li[LiₓNiₐCo_{b}Mn_{c}M_{d}]O₂, M comprises at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0;
dispersing the matrix into an acidic solution and performing stirring, to obtain a matrix mixed solution, wherein a PH value of the acidic solution optionally ranges from 1 to 3;
curing and drying the matrix mixed solution, to obtain matrix mixed powders;
mixing the matrix mixed powders with powders of a coating layer, to obtain a positive electrode active material precursor, wherein the powders of the coating layer comprise boron-containing alloy; and
sintering the positive electrode active material precursor, to obtain a positive electrode active material, wherein
the positive electrode active material comprises:
the matrix, wherein the chemical formula of the matrix is Li[LiₓNiₐCo_{b}Mn_{c}M_{d}]O₂, M comprises at least one of Mg, Nb, Cr, Ce, Fe, Ta, B, Al, V, Ti, Zr, Sn, P, and Mo, x+a+b+c+d=1, x>0, a>0, 0<b<0.1, c>0, and d≥0; and
the coating layer, wherein the coating layer is disposed on a surface of the matrix, and the coating layer comprises the boron-containing alloy.

14. The method according to claim 13, wherein acid in the acidic solution comprises at least one of sulphuric acid, nitric acid, ammonium persulfate, citric acid, oxalic acid, sodium citrate, ammonium citrate, ammonium citrate dibasic, alpha hydroxy acid, salicylic acid, succinic acid, or succinic anhydride.

15. The method according to claim 13 or 14, wherein the acidic solution further comprises ethanol or water.

16. The method according to any one of claims 13 to 15, wherein a mass ratio of the acidic solution to the matrix ranges from 6 to 35, and optionally, ranges from 10 to 20.

17. The method according to any one of claims 14 to 16, wherein a mass percentage of the acid in the acidic solution ranges from 0.1% to 30%, and optionally, ranges from 10% to 20%.

18. The method according to any one of claims 13 to 17, wherein the sintering the positive electrode active material precursor comprises:
sintering the positive electrode active material precursor in an oxygen atmosphere or an inert gas atmosphere.

19. The method according to claim 18, wherein a temperature of the sintering in the inert gas atmosphere ranges from 250°C to 400°C.

20. The method according to claim 18, wherein a temperature of the sintering in the oxygen atmosphere ranges from 500°C to 700°C.

21. The method according to any one of claims 13 to 20, wherein duration of the sintering ranges from 3 h to 10 h.

22. A battery cell, comprising the positive electrode active material according to any one of claims 1 to 12, or the positive electrode active material prepared by using the method for preparing a positive electrode active material according to any one of claims 14 to 21.

23. A battery, comprising the battery cell according to claim 22.

24. A power consuming apparatus, comprising the battery according to claim 23, wherein the battery is configured to provide electric energy.
